# EUROPEAN PATENT APPLICATION

(11) **EP 4 008 894 A1**
(43) Date of publication of application: **08.06.2022**
(21) Application number: 20211210.8
(22) Date of filing: 02.12.2020
(51) Int. Cl.: F03D 1/06

(54) **ROTOR BLADE FOR A WIND TURBINE**

(71) Applicant: Siemens Gamesa Renewable Energy A/S, 7330 Brande (DK)
(72) Inventor: Burchardt, Claus, 9260 Gistrup (DK); Henrichsen, Soeren Randrup Daugaard, 9310 Vodskov (DK); Hurup, Allan, 9240 Nibe (DK); Joergensen, Jens Grandjean, 9000 Aalborg (DK); Nielsen, Mogens, 9220 Aalborg (DK)
(74) Representative: Aspacher, Karl-Georg

(57) **Abstract**

A wind turbine rotor blade (5) comprised by an inboard part (6) and an outboard part (7) transversely divided. The inboard part (6) has a circular attachment with a cross-section (A-A) in the root (8) to be connected to a hub (4). The inboard part (6) extends in the longitudinal direction of the blade (5) between the circular cross-section (A-A) and the cross-section (B-B), having the inboard part a single curved geometry.

## Description

The invention relates to a rotor blade for a wind turbine, with a blade body comprising a root having a circular attachment section to be connected to a hub of the wind turbine.

A wind turbine is used for producing energy based on the interaction of wind with the respective rotor blades of the wind turbine. The rotor blades, usually two to four rotor blades, are attached to a hub of the wind turbine, which is rotated when the wind interacts with the rotor blades, and which is coupled with a generator for producing electric energy, as commonly known.

Rotor blades have a specific geometry to enhance the aerodynamic performance for improving the interaction of the wind with the rotor blades. A typical rotor blade consists of an inboard and an outboard part or section. The outboard part is connected to the inboard part and continuous to the tip at the other blade end. This outboard part has an airfoil cross-section, as it has a high importance regarding the overall aerodynamic performance of the rotor blade.

The outboard part of a typical rotor blade has an airfoil shaped geometry and a root connection attached to the hub of the wind turbine. The outboard part of the rotor blade converts the wind flow around the airfoil to a force that generate a lift of the section and consequently the rotation of the rotor. Between the root and the outboard part of the rotor blade there is a connection piece. The connection piece between root and outboard part of the rotor blade is normal done as short and rapidly as possible and made with as smooth curvature as possible. The connection piece goes from the outer most part to a circular root connection. The inboard part comprises the connection piece and the root of the blade, which is connected to the hub of the wind turbine. The geometry of this inboard part shows a circular cross-section directly at the root, which cross-section is close to the root changes from the circular cross-section to an airfoil cross-section or shape, which is relevant for improving the aerodynamic performance.

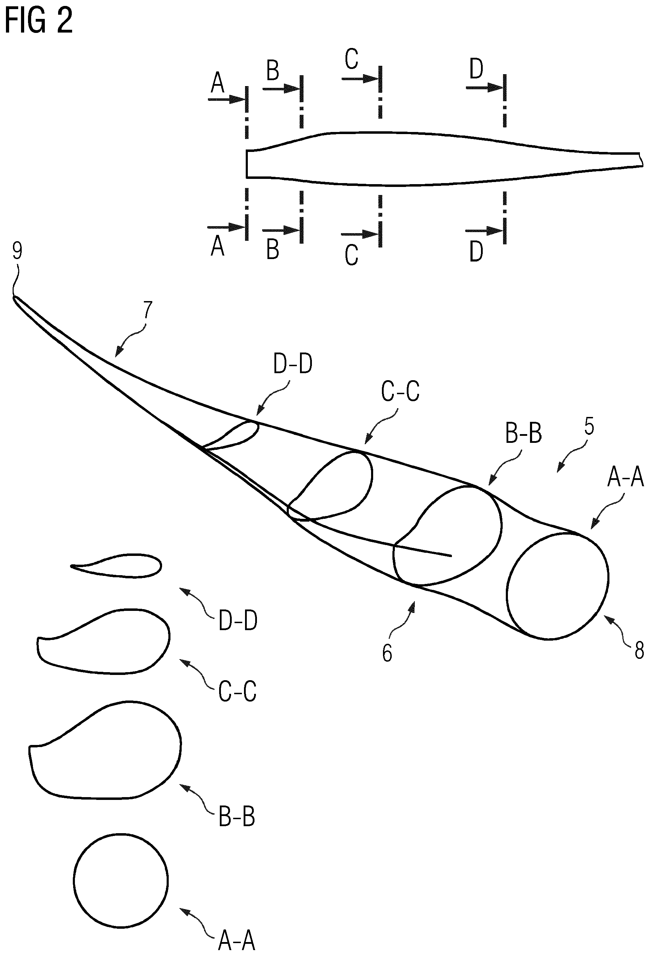

For a conventional blade design, as shown in Figure 2, the geometry of this inboard part shows a transition from a cylindrical root into an airfoil cross-section, which is a typical blade with a double curved geometry. The double curved geometry is not good from a structural point of view. It could also result in some part of the geometry of the inboard part, having a concave curvature in one direction, and a convex curvature in another direction. This is known as a saddle point. There can be a saddle point, even though the cross-section is convex. It is not bad for itself to have a concave curvature, but it is an issue in a single cross-section if it is partly concave and partly convex from structural point of view.

EP 2 253 837 A1 concerns about a manufacturing method of a wind turbine blade having a predesigned segment. The method relates to optimize the production of blades by retrofit the base part of wind turbine blades and add a transition region between the root and the airfoil region of the blade, where the airfoil region is substantially straight. This modification is made in refer to the pre-bend and sweep of the blade, which is the outboard part of the blade. As a result, the aerodynamic design of the blade is affected and to compensate this deviation, flow altering devices are added on the blade to adjust the design lift and the inflow properties of the blade.

The rotor blade design needs to find a good compromise between a good structural performance at the root end, where the rotor blade is firmly fixed to the hub, and where the forces are transferred from the blade to the hub, and the aerodynamic performance along the rotor blade.

It is therefore an object of the invention to provide an improved rotor blade.

The invention therefore proposes a rotor blade for a wind turbine as depicted above, which is characterised in that the blade body starting with a circular cross-section at the root and extends over its length in the longitudinal direction of the blade at least in one transition part of the blade body and either maintains the circular cross-section along this transition part or changes the circular cross-section into a convex or non-convex cross-section at the end of the transition part.

The invention refers to a special inboard part design seen in the longitudinal direction. The inboard part carries the loads of the entire blade, including the outboard part. The speed of the airflow at the inboard part is low due to the shorter distance to the center of the hub. Thus, the structural performance of the inboard part is important, while the aerodynamic performance of the inboard part is less important. On the other hand, the outboard part carries a significantly smaller load but has a high importance for the aerodynamic performance. It is generally known that the inboard part the blade is driven by the structural performance, whereas the outboard part of the blade is driven by the aerodynamic performance. Therefore, the invention focusses on the inboard part and on a specific inboard part design.

The inboard part design of the blade of the present invention, avoids any double curved geometry in a large part of the inboard blade. It has shown that double curved geometry, as is provided at rotor blades of prior art, is negative from a structural point of view, as mentioned above. So, as the invention avoids a double curved geometry in the inboard part, the structural performance is improved. Therefore, the invention focuses on the design of an inboard part of the blade with a single curved geometry to enhance the structural performance of the blade. It enables lighter and longer blades. Another advantage of the invention is that the Brazier effect can be reduced.

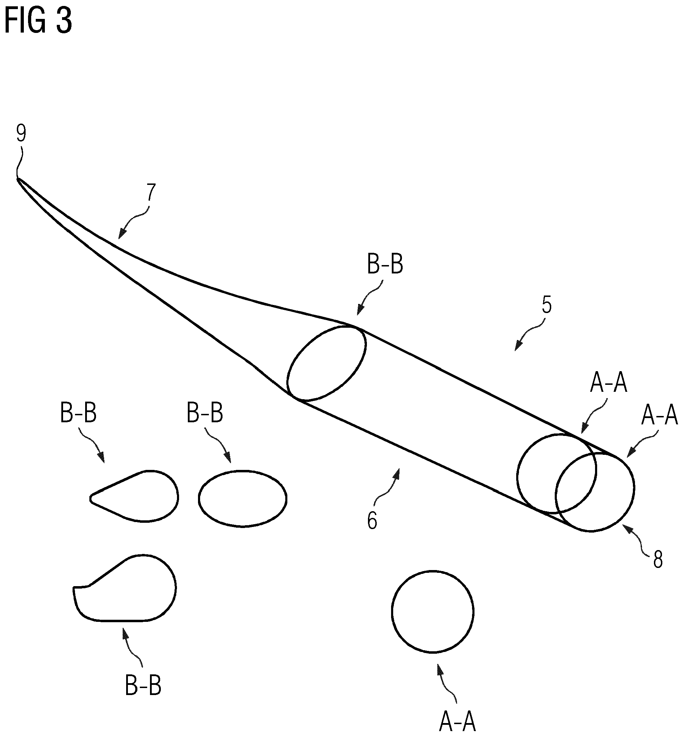

Furthermore, the invention concerns the inboard part of the blade. The inboard part can be a small or a large part of the blade. In a typical blade design, the inboard part is a transition from a circular cross-section into an airfoil cross-section, having typical double curved geometry, which is also not good for the structural performance of the blade. Therefore, to avoid this negative impact on the structural performance of the inboard part, which is mainly driven by its structural performance, the invention proposes an inboard part with a single curved geometry. The inboard part could have a circular cross-section at A-A and a convex cross-section B-B as shown on Figure 3. The convex cross-section at B-B could be circular, elliptic, super elliptic, egg shaped, and/or another convex geometry. The inboard part could also have a non-convex geometry at cross-section B-B, being the geometry of the inboard part single curved only, but not fully convex.

Thus, the inboard part can be considered that is formed by many regions, as it can be seen on Figure 3. The Region I is the root part of the blade, which is typically cylindrical. Region II is a transition section, between region I and region III. Region III is the single curved part, which is the main part of this invention. As region II, the region IV is a transition between region III and region V. Region V is the outboard part of the blade. Each region could be larger or smaller. The inboard part could include all four regions, or one or more regions could be omitted. It could e.g. go directly from region I to region III without a transition region. Region III should always be there, as is the single curved part, the main part of this invention. More regions could be added depending on the needs of the blade design.

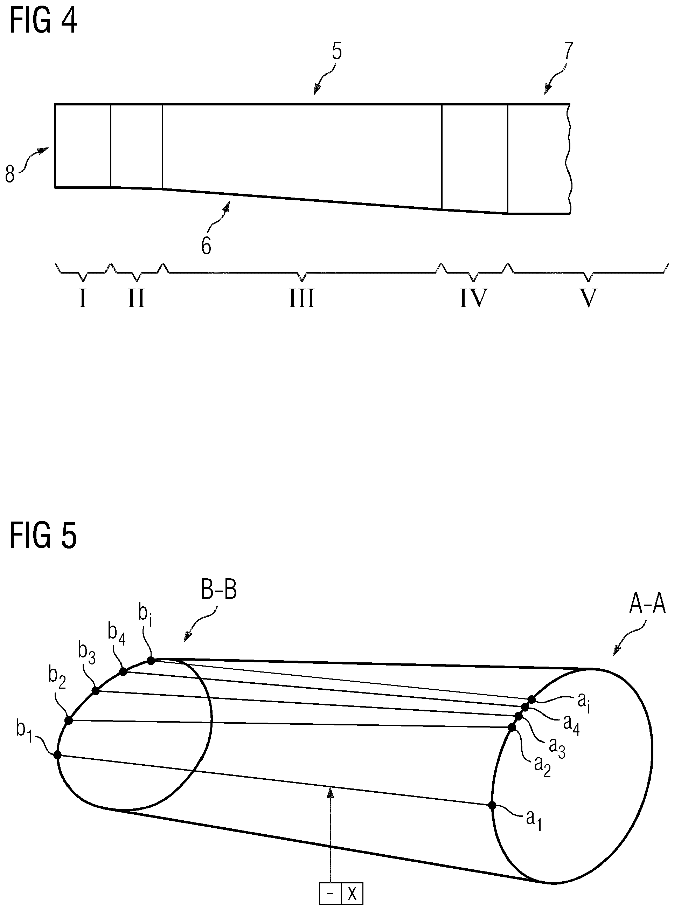

The single curved geometry, the region III, could be perfectly single curved or it could be near single curved. A single curved geometry is well defined as a surface where one of the principal curvatures is zero at any point on the surface. On the other hand, a near single curved geometry, in the context of this invention, should not just be defined as a surface where one of the principal curvatures is near zero. A near single curved surface is a surface which lies within a surface tolerance of a surface which is single curved. In other words, a near single curved geometry it could be consider as a line on the surface of the blade section that has a straightness X, that is smaller than a maximum value Xmax of 200 mm. The near single curved geometry is illustrated in Figure 4, where the cross-section A-A has point a1 and the cross-section B-B has a point b1, both points a1 and b1 are connected by a line on the surface of the blade, with a straightness defined by the value of X. For this invention, the point aᵢ on cross-section A-A, which can be connected to a point bᵢ of the cross-section B-B with such a line, exist on any point on the circumference of cross-section A-A, for the single curved part of the geometry.

Hence, one object of this invention is to make the inboard part single curved. Another object of the invention is to make the cross-section of the inboard part convex.

The optimisations of the surface profile or cross-section seen in the longitudinal direction and the transverse direction enhance the structural performance of the inboard part, which, as depicted above, is driven by its structural properties, as it carries the load of the blade and is responsible for transferring the forces and the rotation to the hub. Hence, the invention improves the structural performance of the inboard part of the blade, without affecting the aerodynamic performance of the outboard part.

As mentioned above, the inventive inboard part with the cross-section changes from a circular cross-section at the root to a convex or non-convex cross-section. This cross-section could be circular, elliptical, super elliptical, egg shaped and/or another convex geometry. The cross-section could also have a non-convex geometry, being the geometry of the inboard part single curved only, but not fully convex.

Depending on the overall design of the rotor blade the transition part may extend over at least 1/10, preferably over at least 1/5 and especially over at least 1/3 of the length of the blade body. This proportions probably will increase for longer blades in the future.

The inboard part could be formed by four regions, where the single curved part may define the whole inboard part or just an inboard region, to which inboard region and outboard part or outboard region running into the blade tip adjoins. So, the single curved geometry is provided over the whole length of the inboard part or just in an inboard region, known as region III. In an alternative, it is possible that the transition part is only a part of the inboard part or inboard region, having different regions as defined before.

As mentioned above, the outboard part or region adjoins the inboard part or region. This change from inboard to outboard is smooth, it may be realised in a defined plane with a maximum blade cross-section or a maximum chord. Also, the adjoin of the outboard and inboard regions could be a transition over several meters.

Finally, the invention refers to a wind turbine comprising a hub with several rotor blades as depicted above.

Other features and advantages of the present invention will be understood from the following detailed description in relation with the enclosed drawings.

### BRIEF DESCRIPTION OF DRAWINGS

- Figure 1: shows a principle sketch of a wind turbine with a nacelle and a hub and respective rotor blades.
- Figure 2: shows a principle sketch and a side view of a conventional rotor blade and its different cross-sections.
- Figure 3: is a principal sketch of an inventive rotor blade and its different cross-sections A-A and B-B.
- Figure 4: shows a side view of the rotor blade of Fig. 3.
- Figure 5: is the transition part of the inboard part of the blade defined between the cross-section A-A and the cross-section B-B, where lines with a straightness tolerance lies on the blade surface between cross-section A-A and B-B.

### DETAILED DESCRIPTION OF PREFERRED EMBODIMENTS

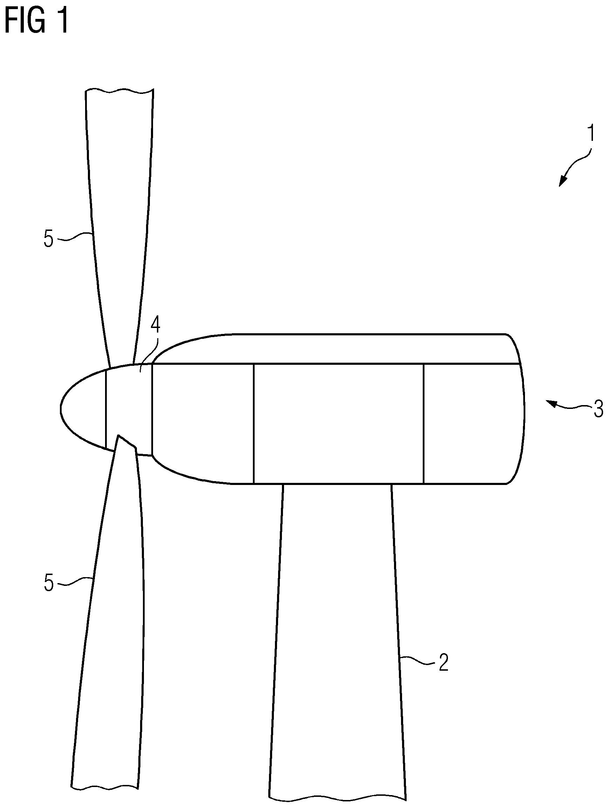

Fig. 1 shows a wind turbine (1), comprising a tower (2) and a nacelle (3) resting on the tower (2). It furthermore comprises a hub (4) to which respective rotor blades (5) are attached. The hub (4) is rotated, when wind acts on the rotor blades (5). The rotation is coupled to a generator (not shown) arranged in the nacelle (3), which generator produces energy.

Fig. 2 shows a conventional rotor blade. It can be seen a perspective view of the conventional rotor blade with its different cross-sections A-A, B-B, C-C, D-D. It also shows a side view of the blade with the respective cross-sections.

Fig. 3 shows an inventive rotor blade (5) that comprises a blade body with an inboard part (6) and an outboard part (7) adjoined to each other. The inboard part (6) in this embodiment extends from the root (8) with a cross-section A-A-, towards to the cross-section B-B. The outboard part (7) of the blade body extends from the cross-section B-B respectively to the tip (9) of the rotor blade (5) as shown.

Fig. 4 shows a side view of the inventive rotor blade (5). The inboard part (6) can be considered in different regions, as many as the design requires. In the figure is shown an inboard part (6) with four main regions:
- Region I: Is the root part, which is typically cylindrical. This region extends from the cross-section A-A towards the cross-section B-B. This region could be cylindrical, perfectly single curved or near single curved.
- Region II: is the transition region between the root (8) and the region III.
- Region III: is the main region of the invention. This is the single curved part of the inboard part (6) of the blade body.
- Region IV: is the outboard part (7) of the blade (5). This region extends from the cross-section B-B and the tip (9) of the blade.

Fig. 5 shows the transition part of the inboard part (6) between the cross-section A-A and the cross-section B-B. As is shown in the fig. 5, the cross-section A-A is formed by a finite number of points a₁-aᵢ, as well as the cross-section B-B, is conformed by points b₁-bᵢ. Each point of the cross-section A-A corresponds to a point of circumference of the cross-section B-B. Hence, there is a point a₁ which is connected to a point b₁ on cross-section B-B which is connected by a line on the surface of the blade section. The line has a straightness X, as shown in fig. 5. Therefore, the point aᵢ can be connected to a point bᵢ with such a line.

The inboard section in this embodiment is realised over its entire length as a transition part, along with the cross-section changes from a circular cross-section A-A to a convex or non-convex cross-section B-B as shown in figure 3. As fig. 3 shows, the cross-section B-B may be circular, elliptical, super elliptical, egg shaped or have another convex geometry.

In the transition part (region III) the surface is either straight or near straight in one of the principal curvatures, being this transition part, single curved. A straight or near straight surface means that a point along the cross-section A-A can be connected with its corresponding point at the cross-sections B-B, respectively, via a straight line running along the surface that connects both cross-sections. The line has a straightness X with a maximum value of 200 mm.

It is obvious that the inboard part (6) of the blade body, respectively the transition part of the inventive rotor blade (5), is designed to improve its structural performance, as it is, avoiding double curved geometry, contrary to the prior art rotor blades, which is described later, and it has only a single curved inboard part (6), that it changes its cross-section A-A from a circular cross-section at the root (8) to a cross-section B-B as shown in figure 3.

As mentioned above, the outboard section (7) adjoins the inboard section (6). In this outboard section (7) the cross-section B-B changes from the circular, elliptical, super elliptical, egg shaped, another convex or non-convex geometry (Figure 3) to an airfoil cross-sectional towards to the tip (9) of the blade (5), as shown at the cross-section B-B along the line X and in the respective fig. 3. As the outboard section (7) is mainly responsible for the overall aerodynamic performance of the rotor blade (5), its design is driven to enhance its aerodynamic property, while the design of the inboard section (6), which is mainly responsible for bearing the load and transferring the forces to the hub (4), is driven to enhance its structural properties, which goal is perfectly met with the respective straight surface seen in the longitudinal direction, and the cross-sectional change from a circular cross-section to a non-circular cross-section, having the inboard part (6) a single curved geometry.

To clearly show the differences between the inventive rotor blade (5) design and the previous rotor blade design reference is made to figures 3 and 4, in which a perspective view and a side view of a rotor blade is shown, respectively, to which respective cross-sections are directly shown at the length positions I, II, III, IV and V.

As shown in fig. 3, the rotor blade (5) body comprise an inboard part (6) and an outboard part (7). The inboard part (6) of the blade body extends from the root (8) with the circular cross-section A-A to the cross-section B-B and the outboard part (7) extends from the cross-section B-B to the tip (9) of the blade. The inboard part (6) and outboard part (7) are adjoined to each other.

Although the present invention has been described in detail with reference to the preferred embodiment, the present invention is not limited by the disclosed examples from which the skilled person is able to derive other variations without departing from the scope of the invention.

## Claims

1. A wind turbine rotor blade (5) transversely divided in an inboard part (6) and an outboard part (7), provided the inboard part (6) with a root (8) and a circular attachment with a cross-section (A-A) to be connected to a hub (4) **characterised in that** the inboard part (6) extends in the longitudinal direction of the blade (5) between the circular cross-section (A-A) and the cross-section (B-B), having the inboard part a single curved geometry.

2. Rotor blade (5) according to claim 1, **characterised in that** the cross-section (B-B) is circular, elliptical, super elliptical, egg shaped or another convex geometry.

3. Rotor blade (5) according to claim 1, **characterised in that** the cross-section (B-B) has a non-convex geometry.

4. Rotor blade (5) according to claim 1, **characterised in that** the inboard part (6) and the outboard part (7) could be one integrated component or at least two separate components to be joined.

5. Rotor blade (5) according to claim 1, comprising a straight surface between the circular cross-section (A-A) and the cross-section (B-B) having the surface tolerance a maximum of 200 mm.

6. Wind turbine (1) comprising a hub (4) with several rotor blades (5) according to one of the preceding claims attached to the hub (4).
